Europäisches Patentamt

European Patent Office

Office européen des brevets

(11) Publication number: 0 248 570
A1

# EUROPEAN PATENT APPLICATION

(21) Application number: 87304544.7

(22) Date of filing: 21.05.87

(51) Int. Cl.4: **C08G 18/42** , C08J 11/00

(30) Priority: 30.05.86 GB 8613199

(43) Date of publication of application:
09.12.87 Bulletin 87/50

(84) Designated Contracting States:
AT BE CH DE ES FR GB IT LI NL SE

(71) Applicant: IMPERIAL CHEMICAL INDUSTRIES PLC
Imperial Chemical House Millbank
London SW1P 3JF(GB)

(72) Inventor: Bentley, James Martyn
Bleuckeveldlaan 14
B-1980 Tervuren(BE)
Inventor: Brown, James Peter
Stijn Streuvelslaan 9
B-1960 Sterrebeek(BE)
Inventor: Frijns, Guy
Drève des Sapins 5
B-1330 Rixensart(BE)

(74) Representative: Leherte, Georges Maurice Lucien Marie et al
Imperial Chemical Industries PLC Legal Department: Patents P.O. Box 6
Welwyn Garden City Herts. AL7 1HD(GB)

(54) Polyester polyols.

(57) Polyethylene terephthalate (such as scrap) is digested with excess glycol and the product is reacted with an aliphatic dicarboxylic acid or ester forming derivative thereof to form a random copolyester polyol having MW 1000-4000 and in which terephthalic acid residues are 10 -60 % of total acid residues on a molar basis.

EP 0 248 570 A1

This invention relates to polyester polyols and especially to co-polyester polyols containing terephthalic acid residues, to their manufacture and to their use in the production of polyurethanes.

The manufacture of polyurethanes from organic polyisocyanates and polyester polyols is well known. For polyurethanes of an elastomeric nature such as flexible foams and solid elastomers, the polyesters usually contain from two to three hydroxyl groups per molecule and have molecular weights in the range 1000 to 8000.

The polyesters are generally made by reacting an aliphatic dicarboxylic acid, especially adipic acid, with an excess, appropriate to the desired molecular weight, of a glycol such as ethylene glycol or diethylene glycol with, where necessary, a higher functionality polyol such as trimethylolpropane or pentaerythritol.

Polyesters of different constitution have been proposed but these have generally failed to achieve commercial importance because of their inability to compete with the adipates on either technical or economic grounds.

In United States Patent No. 4048104, it has been proposed to use polyethylene terephthalate digestion products as minor components of flexible foam formulations. The digestion products are obtained by digesting polyethylene terephthalate polymers with polyols having molecular weights of up to 500 until an acetone-soluble polyol product is obtained. Unfortunately, the digested polyol products are said to be incompatible with the halogenated blowing agents commonly used in foam formulations. Consequently, digestion products are reacted with tolylene diisocyanate to form prepolymers which are then reacted with conventional flexible foam polyols. Thus, 20 parts of a digestion product obtained by digesting polyethylene terephthalate with diethylene glycol are reacted with 80 parts of tolylene diisocyanate to form a prepolymer, 41 parts of which are then reacted with 100 parts of a polyol component containing a triol of molecular weight 6000.

Thus, even though polyethylene terephthalate digestion products are potentially cheap, US 4048104 describes a process in which such products are minor additives rather than replacements for conventional polyols. It has now been found that polyethylene terephthalate digestion products can be converted to copolyesters which may be used directly as the main polyol compounds in polyurethane formulations.

Accordingly, the present invention provides a method for the preparation of a polyester polyol which comprises the steps of :

(A) digesting polyethylene terephthalate with at least one glycol having a molecular weight in the range 62 to 118 whereby to form a polyol product consisting essentially of one or more glycols and one or more bis glycol esters of terephthalic acid, and

(B) reacting the polyol product with at least one aliphatic dicarboxylic acid, or an ester-forming derivative thereof, and optionally further glycol, to form a polyester polyol containing randomly distributed residues of terephthalic acid and aliphatic dicarboxylic acid, the relative proportions of polyethylene terephthalate, glycols and dicarboxylic acids used in steps (A) and (B) being such that the polyester polyol product has a molecular weight in the range 1000 to 4000 and that from 10 to 60% of the dicarboxylic acid residues on a molar basis are terephthalic acid residues.

The invention also specifically relates to the thus obtained products, which are new copolyesters comprising randomly distributed residues of terephthalic acid and at least one aliphatic dicarboxylic acid and residues of ethylene glycol and possibly one or more further glycols having a molecular weight of not more than 118, whereas the amount of terephthalic acid residues is in the range of 10-60 mole % of the total amount of dicarboxylic acid residues and the amount of ethylene glycol residues is at least 10 % of the total amount of glycol residues.

Any polyethylene terephthalate may be used in step (A) of the method of the invention but it is preferred for economic reasons to use scrap materials such as used photographic film, synthetic fibres or soft drinks bottles and waste from the production of other products made from polyethylene terephthalate.

Glycols which may be used in step (A) include ethylene glycol, propylene glycol, trimethylene glycol, tetramethylene glycol, pentamethylene glycol, hexamethylene glycol, diethylene glycol and mixtures of two or more such glycols. In order to depolymerise the polyethylene terephthalate substantially completely during the digestion process, at least 1.2 moles of glycol per ethylene terephthalate unit should be used.

The digestion process is suitably carried out for several hours at 200-270 deg. Celsius under an inert gas such as nitrogen. Transesterification catalysts may be used if desired. When ethylene glycol is used as the digesting glycol, the product will be a mixture of ethylene glycol and bis hydroxyethyl terephthalate. When other glycols are used, the product will be a more complex mixture. Thus, the use of propylene glycol will produce a mixture containing ethylene and propylene glycols, bis hydroxyethyl terephthalate, bis hydroxypropyl terephthalate and hydroxyethyl hydroxypropyl terephthalate.

2

Aliphatic dicarboxylic acids which may be used in step (B) of the method of the invention include succinic, glutaric and adipic acids. Ester-forming derivatives thereof which may be used include di-lower alkyl esters, especially dimethyl esters. It is particularly convenient to use a commercially available mixture of the dimethyl esters of succinic, glutaric and adipic acids, for example a mixture in the approximate weight ratio of 1:3:1.

The amount of aliphatic acid or acid derivative used in step (B) will be sufficient to give a polyester polyol product having the desired ratio of terephthalic acid residues to aliphatic acid residues. If necessary to give the desired molecular weight, further glycol can be added at this stage or higher functionality polyols to introduce a degree of branching into the polyester. Suitable higher functionality polyols include glycerol, trimethylolethane, 1,2,6-hexanetriol, trimethylolpropane, pentaerythritol, di-trimethylolpropane, dipentaerythritol, and triglycerides of ricinoleic acid. The hydroxyl functionality of the polyester polyol should preferably not exceed 2.6, the most useful products having functionalities of 2.0 - 2.3.

Step (B) may be performed under conventional polyesterification conditions, for example temperatures of up to 230 - 240 deg. Celsius with removal of water or lower alkanol.

The polyester polyols of the invention may be reacted with organic polyisocyanates to form polyurethanes including solid elastomers, microcellular elastomers, coatings, adhesives, thermoplastics and flexible foams. The polyisocyanates used will generally depend upon the type of polyurethane being made and may be selected from aromatic polyisocyanates such as diphenylmethane diisocyanate in its various pure, isomer mixture, liquid and unrefined forms, modified isocyanates and tolylene diisocyanate and aliphatic diisocyanates such as hexamethylene diisocyanate and isophorone diisocyanate. Conventional formulations and techniques may be employed and accordingly, where appropriate, reaction mixtures may contain one or more additives such as catalysts, chain-extenders, blowing agents, surfactants, foam stabilisers, fire-retardants, fillers and pigments.

The polyesters provided by the invention are cheaper than corresponding polyesters made wholly from adipic or other aliphatic dicarboxylic acids and, at the same urethane content, provide higher modulus foams and elastomers.

The above invention is illustrated, but not limited, by the following examples.

## Example 1

1600 parts by weight of polyethylene terephthalate scrap material, obtained as 1/4" dice-cut chips, and 2400 parts by weight of diethylene glycol were charged to a reactor fitted with a stirrer, thermocouple and nitrogen sparge dip leg. The contents were agitated with a 50 litres/hr nitrogen sparge rate and heated to 220 deg. Celsius. The contents were maintained at this temperature for 10-12 hours and sampled periodically; the digestion was deemed complete when the "cloud point" of the product was less than 25 deg. C [The "cloud point" was the temperature at which, by stirring and cooling a sample in a test tube the product became so turbid that the thermometer bulb could no longer be seen]. The product is DIGESTION PRODUCT A and had an analysis as follows : hydroxyl value 617 KOH/g, acid value 2.85 mg KOH/g and viscosity at 51 deg. Celsius of 48 centistokes.

## Example 2

295 parts by weight of DIGESTION PRODUCT A (from Example 1) and 205 parts by weight of adipic acid were charged to a reactor together with 0.04 parts by weight of tetrabutyl-o-titanate esterification catalyst. The reactor contents were heated to 230 deg. Celsius under a nitrogen sparge rate of 62 litres/hr. Water was removed (+/- 51 p.b.w.) as overheads over a period of 3 hours and the contents were maintained at 230 deg. Celsius over a further 13 hours until the acid value of the product fell below 1.0 mg KOH/g. The final product, PRODUCT X had the following analysis :
Hydroxyl value 44.3 mg KOH/g, acid value 1.0 mg KOH/g, viscosity at 100 deg. Celsius, 538 centistokes.

Useful microcellular shoe soles were obtained by reacting Product X with diphenylmethane diisocyanate in a conventional formulation.

Example 3

340 parts by weight of DIGESTION PRODUCT A (from Example 1) and 261 parts by weight of a commercial mixture of dimethyl esters of adipic, glutaric and succinic acids in an approximate weight ratio of 1:3:1 were charged to a reactor together with 0.04 parts by weight of tetrabutyl-o-titanate esterification catalyst. The reactor contents were heated to 230-240 deg. Celsius under a nitrogen sparge rate of 62 litres/hour. Methanol was removed (+/- 105 p.b.w.) as overheads over a period of 4 hours and the contents were maintained at 230 deg. Celsius over a further 9 hours until the methoxyl content fell below 0.5% (as methanol). The final product, PRODUCT Y, had the following analysis :
Hydroxyl value 44.6 mg KOH/g, acid value 0.08 mg KOH/g,
Methoxyl content 0.13 % (as methanol) and viscosity at 100 deg. Celsius, 550 centistokes.

Useful microcellular shoe soles were obtained by reacting Product Y with diphenylmethane diisocyanate in a conventional formulation.

Example 4

1701 parts by weight of polyethylene scrap material, obtained as 1/4" dice-cut chips, 1087 parts by weight of diethylene glycol, 1211 parts by weight of 1.6 hexane diol and 0.50 parts by weight of stannous octoate were charged to a reactor and reacted as in Example 1. The contents were heated to 230 Deg. C under a 60 l/hr nitrogen sparge. After 3 hours at 230 Deg. C, a constant "cloud point" of 37 Deg. C was obtained. This product, DIGESTION PRODUCT B, had the following analysis : hydroxyl value 577 mg KOH/g, acid value 0.82 mg KOH/g.

Example 5

2157 parts by weight of polyethylene terephthalate scrap material obtained as 1/4" dice-cut chips, 3604 parts by weight of diethylene glycol and 0.9 parts by weight of stannous octoate catalysts were charged to a reactor and reacted as in Example 1. After 3 1/2 hours at 230-240 Deg. C a product of "cloud point" < 25 Deg. C was obtained. The product had an analysis of 648 mg KOH/g hydroxyl value, an acid value of 3.2 mg KOH/g and a monoethylene glycol/diethylene glycol content of 4.58 % / 39.8 %. This product is DIGESTION PRODUCT C.

Example 6

2454 parts by weight of DIGESTION PRODUCT B (from Example 4) and 1578 parts by weight of adipic acid were charged to a reactor without further catalyst addition. The reactor contents were heated to 230 Deg. C under a nitrogen sparge take of 62 litres/hr. water was removed (+/- 340 p.b.w.) as overheads over a period of 3 hours and the contents were maintained at 230 Deg. C over a further 9 1/2 hours until the acid value fell below 1.0 mg KOH/g. The final product, product Z, had the following analysis :

Hydroxyl value 31.0 mg KOH/g
acid value 0.72 mg KOH/g
viscosity at 100 Deg. C 1585 centipoises
(at 125 Deg. C 895 centipoises
at 150 Deg. C 505 centipoises).
Useful microcellular shoe soles were obtained by reacting product Z with diphenylmethane diisocyanate in a conventional formulation.

Example 7

3326 parts by weight of DIGESTION PRODUCT C were reacted as in Example 2 with 2484 parts by weight of adipic acid without the addition of further esterification catalyst. 680 parts by weight of water were recovered over 7 hours whilst heating from 170 Deg. C to 240 Deg. C. After a further 11 hours at 240 Deg. C, the product (XX) had the following analysis :

| Hydroxyl value | 45.5 mg KOH/g |
| acid value | 0.43 mg KOH/g |
| viscosity at 100 Deg. C | 505 centipoises |
| free MEG/DEG | 0.04 % / 0.10 % |
| water content | 0.05 % |

## Example 8

3195 parts by weight DIGESTION PRODUCT C were reacted as in Example 3 with 2657 parts by weight of a commercial mixture of dimethyl esters of adipic, glutaric and succinic acids (in an approximate weight ratio of 1:3:1) and 12.8 parts by weight of trimethylol propane together with 0.3 parts by weight of tetrabutyl-o-titanate catalyst. 1235 parts by volume of methanol were recovered over 9 hours from 190 Deg. C to 230 Deg. C. After a further 10 hours at 230 Deg. C the product had the following analysis :

| Hydroxyl value | 46.2 mg KOH/g |
| acid value | 0.10 mg KOH/g |
| viscosity at 100 Deg. C | 570 centipoises |
| free MEG/DEG | zero/0.4 % |

## Examples 9 and 10

Using the copolyester polyol products XX and YY according to Examples 7 and 8 in typical formulations for standard one-colour, one-density shoe soles, as specified in table 1A, microcellular elastomer samples were prepared on an ELASTOGRAN EMB machine (VTE-machine), using conventional operating conditions :

| mixing speed : | 7800 rpm |
| mix head temperature : | water cooled |
| polyol blend temperature : | 45 Deg. C |
| isocyanate component temperature : | 35 Deg. C |
| mould temperature : | 50 Deg. C. |

The obtained elastomer samples had the properties stated in table 1B.

TABLE 1

Microcellular Elastomers prepared using polyol products XX and YY

|  | | Example 9 | Example 10 |
|---|---|---|---|
| **A Elastomer formulation** | | | |
| Polyol blend : | | | |
| copolyester polyol XX | | 85.4 | - |
| copolyester polyol YY | | - | 85.4 |
| 1,4 butanediol | | 13.5 | 13.5 |
| DABCO EG (from Air Products) | | 0.5 | 0.5 |
| Water | | 0.4 | 0.4 |
| DC 190 (a silicone from DOW Corning) | | 0.2 | 0.2 |
| Isocyanate component : | | | |
| Suprasec VM 051 (a MDI prepolymer from ICI having a NCO content of 18 %) | | 96.0 | 96.0 |
| **B Properties** | | | |
| Minimum demould time | | 2 min. 30 sec. | 2 min 15 sec. |
| Test sheet density (DIN 53420) | $Kg/m^3$ | 600 | 580 |
| Surface hardness (DIN 53505) | Deg. Sh.A | 62 | 61 |
| Tensile strength at break (DIN 53504) | MPa | 7.0 | 6.8 |
| Elongation at break | % | 390 | 365 |

Claims

1. A polyester polyol which is the condensation product of at least one polyol with at least one polycarboxylic acid, characterized in that it is a copolyester having a molecular weight in the range of 1000 to 4000, comprising randomly distributed residues of terephthalic acid and at least one aliphatic dicarboxylic acid and residues of ethylene glycol and possibly one or more further glycols having a molecular weight of not more than 118, whereas the amount of terephthalic acid residues is in the range of 10-60 mole % of the total amount of dicarboxylic acid residues and the amount of ethylene glycol residues is at least 10 % of the total amount of glycol residues.

2. A copolyester polyol according to claim 1 characterized in that the aliphatic dicarboxylic acid residues are residues of adipic, glutaric and/or succinic acid.

3. A copolyester polyol according to claim 2 characterized in that the aliphatic dicarboxylic residues consist of adipic, glutaric and succinic acid in a relative ratio in the order of 1:3:1.

4. A copolyester polyol according to anyone of the preceeding claims characterized in that it further comprises minor amounts of residues of higher functionality polyols.

5. A copolyester polyol according to any one of the preceeding claims characterized in that it has a functionality in the range from 2.0 to 2.3.

6. A method for the preparation of a polyester polyol which comprises the steps of :

(A) digesting polyethylene terephthalate with at least one glycol having a molecular weight in the range 62 to 118 whereby to form a polyol product consisting essentially of one or more glycols and one or more bis glycol esters of terephthalic acid, and

(B) reacting the polyol product with at least one aliphatic dicarboxylic acid, or an ester-forming derivative thereof, and optionally further glycol, to form a polyester polyol containing randomly distributed residues of terephthalic acid and aliphatic dicarboxylic acid, the relative proportions of polyethylene terephthalate, glycols and dicarboxylic acids used in steps (A) and (B) being such that the polyester polyol product has a molecular weight in the range 1000 to 4000 and that from 10 to 60% of the dicarboxylic acid residues on a molar basis are terephthalic acid residues.

7. A method according to claim 6 wherein in step (A) at least 1.2 moles of glycol per ethylene terephthalate unit are used.

8. A method according to claim 6 wherein the aliphatic dicarboxylic acid comprises at least one of succinic, glutaric and adipic acids.

9. A method according to claim 6 wherein a mixture of the dimethyl esters of succinic, glutaric and adipic acids is used.

10. A method for the preparation of polyurethanes which comprises reacting an organic polyisocyanate with a copolyester polyol of claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 82, no. 2, 13th January 1975, page 12, abstract no. 4756s, Columbus, Ohio, US; & PL-B-70 057 (INSTYTUT CHEMII PRZEMYSLOWEJ) 15-03-1974 * Abstract * | 1-10 | C 08 G 18/42 C 08 J 11/00 |
| | --- | | |
| A | EP-A-0 104 736 (FREEMAN CHEMICAL CORP.) * Claims 1,2,7,8 * | 1-10 | |
| | ----- | | |

| | | | TECHNICAL FIELDS SEARCHED (Int. Cl.4) |
|---|---|---|---|
| | | | C 08 G C 08 J |

The present search report has been drawn up for all claims

| Place of search | Date of completion of the search | Examiner |
|---|---|---|
| THE HAGUE | 10-09-1987 | DECOCKER L. |